# EUROPÄISCHE PATENTANMELDUNG

(11) **EP 0 749 861 A2**
(43) Veröffentlichungstag der Anmeldung: **27.12.1996**
(21) Anmeldenummer: 96105386.5
(22) Anmeldetag: 04.04.1996
(51) Int. Cl.: B60K 17/02

(54) **Mitnehmerscheibe zwischen einer Brennkraftmaschine der Hubkolbenbauart und einem Wandler**

(30) Priorität: 23.06.1995 DE 19522869
(71) Anmelder: Dr.Ing.h.c. F. Porsche Aktiengesellschaft, D-70435 Stuttgart (DE)
(72) Erfinder: Hoebel, Peter, 75242 Neuhausen (DE)

(57) **Zusammenfassung**

Eine mit der Brennkraftmaschine (1) verbundene Mitnehmerscheibe (7) ist unter Vermittlung von Befestigungsschrauben (8) mit dem Wandler (2) verbunden.

Die Mitnehmerscheibe (7) umfaßt einen parallel zu einer Mittellängsachse einer Kurbelwelle (5) der Brennkraftmaschine verlaufenden Flansch (40), der Aufnahmen (17) des Wandlers übergreift. Zwischen Flansch und Aufnahmen sind radial zur Kurbelwelle (5) ausgerichtete Befestigungsschrauben (12) vorgesehen.

## Beschreibung

Die Erfindung betrifft eine Mitnehmerscheibe zwischen einer Brennkraftmaschine der Hubkolbenbauart und einem Wandler nach dem Oberbegriff des Patentanspruches 1.

Bei einer bekannten Verbindung einer Mitnehmerscheibe mit einem Wandler -Porsche Sportomatik; nicht veröffentlichte Porsche Zeichnung 905.116.003.20- umfaßt sowohl die Mitnehmerscheibe, wie auch der Wandler je einen Befestigungsflansch. Beide Flansche verlaufen schräg zu einem Mittellängsachse, einer Kurbelwelle und sind unter Vermittlung von Schrauben, bestehend aus Schraubenbolzen und Schraubenmuttern, miteinander verbunden. Obwohl diese Ausführungen bezüglich Zugänglichkeit und Montagetoleranzen -letztere werden durch eine Zentriereinrichtung zwischen Wandler und Brennkraftmaschine festgelegt- ein übersichtliches Bauprinzip ist, treten gerade bei kompakten Triebwerken, umfassend fest miteinander verbundene Brennkraftmaschine und Wandler, räumliche Verhältnisse auf, für die diese Art der Verbindung schwerlich geeignet ist.

Aufgabe der Erfindung ist es daher, eine Verbindung einer Mitnehmerscheibe einer Brennkraftmaschine mit einem Wandler zu schaffen, die bei guter Zugänglichkeit anspruchsvolle kompakte Anordnungen solcher Triebwerkseinheiten ermöglicht.

Erfindungsgemäß wird diese Aufgabe durch die Merkmale des Patentanspruches 1 gelöst. Weitere, die Erfindung ausgestalteten Merkmale sind in den Unteransprüchen enthalten.

Die mit der Erfindung hauptsächlich erzielten Vorteile sind darin zu sehen, daß dank der radialen Ausrichtung der Befestigungsschrauben der Wandler besonders nahe an die Brennkraftmaschine heranführbar ist. Hinzu kommt, daß die Befestigungsschrauben problemlos zu Montagezwecken zugänglich sind. Räumlich günstig wirkt sich auch die Anordnung des Anlasserkranzes und des Sensorkranzes aus. Etwa auftretende Toleranzen zwischen Zentriereinrichtung und Flansch im Bereich der Befestigungsschrauben werden durch die elastische Ausbildung ausgeglichen. Sie läßt sich auf einfache Weise durch geeignete Ausnehmungen im Flansch verwirklichen, die je nach Gestaltung mit Lösungen des Konstruktionsgrundsatzes "Naben-Wellen-Verbindungen mit axialen Verschraubungen durchführen" vergleichbar sind.

In der Zeichnung ist ein Ausführungsbeispiel der Erfindung dargestellt, das nachstehend näher beschrieben ist.

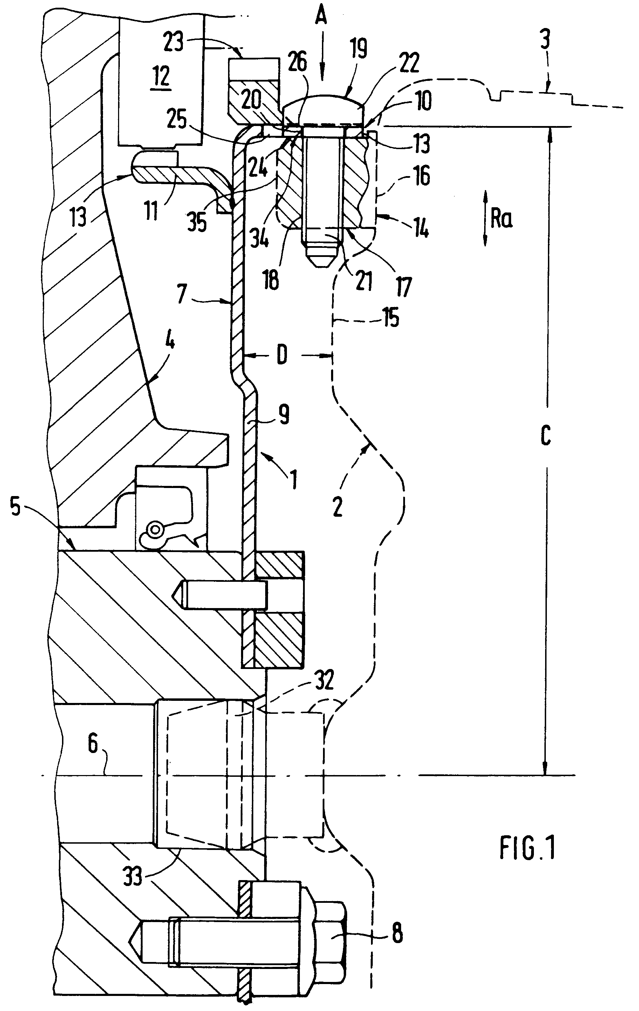

Es zeigt
- Fig. 1: einen Teillängsschnitt eines Triebwerkes im Verbindungsbereich einer Brennkraftmaschine mit einem Wandler und

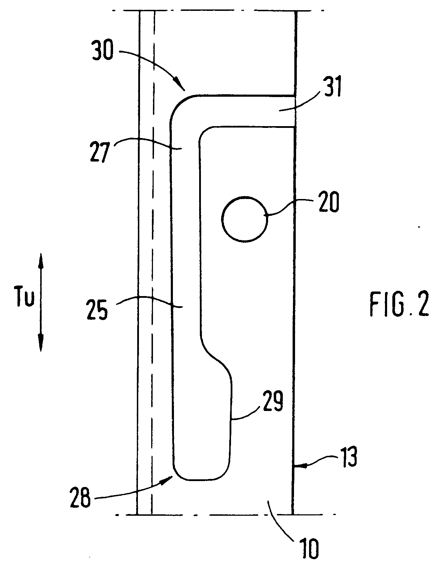

- Fig. 2: eine Ansicht in Pfeilrichtung A der Fig. 1.

Eine Brennkraftmaschine 1 ist mit einem Wandler 2 eines nicht näher dargestellten Getriebes 3 verbunden. Dabei ist der Wandler 2 aus Gründen einer kompakten Bauweise sehr nahe an die Brennkraftmaschine 1 herangeführt.

Die Brennkraftmaschine 1 umfaßt ein Kurbelgehäuse 4 mit einer Kurbelwelle 5, die eine Mittellängsachse 6 aufweist. Mit der Kurbelwelle 5 fest verbunden ist eine Mitnehmerscheibe 7, die durch Schrauben 8 an der Kurbelwelle 5 in Lage gehalten wird.

Die Mitnehmerscheibe 7 umfaßt ein aufrechtes Scheibenteil 9 und einen Flansch 10. Das Scheibenteil 9 weist auf der der Brennkraftmaschine 1 zugekehrten Seite einen Sensorkranz 11 auf, der mit einem innerhalb des Kurbelgehäuses 4 angeordneten zylinderischen Sensor 12, der radial zur Kurbelwelle 5 ausgerichtet ist, zusammenwirkt. Der Sensorkranz 11 ist als Winkel ausgeführt und untergreift mit seinem freien Ende 13, das vom Scheibenteil 9 in Richtung Kurbelgehäuse 4 abgekehrt ist, den Sensor 12.

Der Flansch 10 verläuft mit parallelem Abstand C zur Mittellängsebene 6 und ist mit seinem freien Ende 13 dem Wandler 2 zugekehrt. Der Wandler 2 ist mit einer im wesentlichen aufrecht verlaufenden jedoch profilierten Gehäusewand 14 versehen, die mit einem ersten in axialer Richtung erweiterten Wandabschnitt 15 möglichst nahe -Abstand D- an das Scheibenteil 9 herangeführt ist. An einem zweiten in axialer Richtung gegenüber dem ersten Wandabschnitt 15 zurückgesetzten Wandabschnitt 16 der im Durchmesser des Wandlers gesehen, außerhalb des ersten Wandabschnittes 15 liegt, sind am Umfang verteilt mehrere Aufnahmen 17 fest angebracht, die vom Flansch 10 übergriffen werden. Jede Aufnahme 17 umfaßt eine Gewindebohrung 18, in die ein den Flansch 10 gegen die Aufnahme 17 spannende Befestigungsschraube 19 eingedreht ist; Gewindebohrung 18 und Befestigungsschraube 19 sind radial zur Kurbelwelle 5 ausgerichtet. Die Befestigungsschraube 19 weist einen eine Bohrung 20 im Flansch 10 durchdringenden Gewindezapfen 21 und einen Schraubenkopf 22 auf, wobei zwischen Schraubenkopf 22 und dem Kurbelgehäuse 4 auf dem Flansch 10 ein Anlasserkranz 23 festgesetzt ist.

Der Flansch 10 ist örtlich in einem Befestigungsbereich 24 der Befestigungsschraube 19 in radialer Richtung Ra elastisch ausgebildet. Hierzu ist eine Ausnehmung 25 im Flansch 10 vorgesehen, die zwischen einem Flanschteil 26 und dem Scheibenteil 9 angeordnet ist. Die Ausnehmung 25 ist über einen Teilumfang Tu des Flansches 10 als Schlitz 27 ausgeführt, d.h., der Schlitz 27 erstreckt sich -in Umfangsrichtung Flansch 10 gesehen- beiderseits der Bohrung 20 im Flanschteil 26. Zur Optimierung der elastischen Ausbildung ist der Schlitz 27 zumindest auf einer ersten Endseite 28 mit einer Erweiterung 29 versehen bzw. er kann auf einer zweiten Endseite 30 in Richtung freies Ende 13 geführt sein und eine Durchgangsöffnung 31 aufweisen.

Außerdem ist der Wandler 2 mit einem Zentrierzapfen 32 versehen, der sich entlang der Mittellängsachse 6 erstreckt und mit einer Zentrierbohrung 33 der Brennkraftmaschine 1 lagefestlegend zusammenarbeitet. Die Zentrieröffnung 33 ist im Ausführungsbeispiel in der Kurbelwelle 4 vorgesehen. Konzentrisch zum Zentrierzapfen 32 ist eine Auflagefläche 34 der als örtliche Stütze 35 ausgebildeten Aufnahme 17 ausgebildet; auf der Auflagefläche 34 liegt der Flansch 10 auf. Soweit das Flanschteil 26 bzw. die Aufnahme 17 außerhalb der festgelegten Konstruktionslage liegt, werden die auftretenden Toleranzen durch die elastische Ausbildung ausgeglichen, ohne daß dies zu einer Desaxierung zwischen Wandler 2 und Kurbelwelle 5 der Brennkraftmaschine führt, da ja die beiden durch den Zentrierzapfen 32 und die Zentrierbohrung 33 lagemäßig zueinander festgelegt sind.

## Patentansprüche

1. Mitnehmerscheibe zwischen einer Brennkraftmaschine der Hubkolbenbauart und einem Wandler eines der Brennkraftmaschine nachgeschalteten Getriebes, welche Mitnehmerscheibe fest mit einer Kurbelwelle der Brennkraftmaschine und unter Vermittlung von Befestigungsschrauben mit dem Wandler verbunden ist, wobei zwischen Wandler und Brennkraftmaschine eine Zentriereinrichtung vorgesehen ist, dadurch gekennzeichnet, daß die Mitnehmerscheibe (7) einen mit parallelem Abstand (C) zu einer Mittellängsebene (6) der Kurbelwelle (5) verlaufenden Flansch (10) aufweist, der Aufnahmen (17) des Wandlers (2) übergreift und daß zwischen den Aufnahmen (17) und dem Flansch (10) die Befestigungsschrauben (19) wirksam sind, die radial zur Kurbelwelle (5) ausgerichtet sind.

2. Mitnehmerscheibe nach Anspruch 1, dadurch gekennzeichnet, daß der Flansch (10) örtlich in einem Befestigungsbereich der Befestigungsschrauben (19) in radialer Richtung relativ zur Kurbelwelle (5) elastisch ausgebildet ist.

3. Mitnehmerscheibe nach Anspruch 2, dadurch gekennzeichnet, daß die elastische Ausbildung durch eine Ausnehmung (25) im Flansch (10) und im Flanschteil (26) gebildet wird, welche Ausnehmung (25) sich zwischen dem Flanschteil (26) und einem aufrechten Scheibenteil (9) der Mitnehmerscheibe (7) vorgesehen ist.

4. Mitnehmerscheibe nach Anspruch 3, dadurch gekennzeichnet, daß die Ausnehmung (25) als Schlitz (27) ausgeführt ist, der sich über einen Teilumfang (Tu) des Flansches (10) erstreckt.

5. Mitnehmerscheibe nach Anspruch 4, dadurch gekennzeichnet, daß der Schlitz (27) zumindest auf einer Innenseite (28) mit einer Erweiterung (29) versehen ist.

6. Mitnehmerscheibe nach Anspruch 4, dadurch gekennzeichnet, daß der Schlitz (27) auf einer Endseite (30) zur freien Seite (13) des Flansches (10) hin mit einer Durchgangsöffnung (31) versehen ist.

7. Mitnehmerscheibe nach Anspruch 1, dadurch gekennzeichnet, daß die Aufnahmen (17) örtliche Stützen (35) sind.

8. Mitnehmerscheibe nach Anspruch 7, dadurch gekennzeichnet, daß die Aufnahmen (17) mit Gewindebohrungen (18) versehen sind, in die die Befestigungsschrauben (19) eingedreht sind.

9. Mitnehmerscheibe nach einem oder mehreren der vorangehenden Ansprüche, dadurch gekennzeichnet, daß der Flansch (10) am äußeren Umfang einen Anlasserkranz (23) trägt, der zwischen Befestigungsschraube (19) und Brennkraftmaschine (1) angeordnet ist.

10. Mitnehmerscheibe nach einem oder mehreren der vorangehenden Ansprüche, dadurch gekennzeichnet, daß das Scheibenteil (9) einen Sensorkranz (11) trägt, der mit einem im Kurbelgehäuse (4) angeordneten Sensor zusammenarbeiten.
